# EUROPEAN PATENT APPLICATION

(11) **EP 2 065 959 A1**
(43) Date of publication of application: **03.06.2009**
(21) Application number: 08020455.5
(22) Date of filing: 25.11.2008
(51) Int. Cl.: H01M 8/02

(54) **Fuel cell bipolar plate and method for producing the same**

(30) Priority: 28.11.2007 JP 2007307803; 25.09.2008 JP 2008245208
(71) Applicant: SEIKOH GIKEN CO., LTD., Matsudo-shi, Chiba 270-2214 (JP)
(72) Inventor: Takahashi, Shigenobu, Chiba 2702214 (JP)
(74) Representative: Manitz, Finsterwald & Partner GbR

(57) **Abstract**

The present invention provides a bipolar plate for a fuel cell having a novel configuration in which the draining function is improved, the operation is simplified, the resin contained therein is prevented from being decomposed and eluted, and the method for producing the same. The method for producing a bipolar plate for a fuel cell comprised of a composite material of carbon powders and a thermosetting resin, in which the method comprises the steps of compressing said composite material of the carbon powders and the thermosetting resin to provide a molded body by compression molding having a gas flow field groove for flowing a reactive gas formed on at least one of the surfaces thereof, wherein a punching die and a molding die opposed to each other being used and said composite material of the carbon powders and the thermosetting resin being received in a material receiving part of said molding die, wherein said punching die being approached relatively to said molding die; and irradiating an infrared laser beam toward the internal surface of said gas flow field groove while relatively moving the optical axis of said infrared laser beam to said molded body along said gas flow field groove, thereby applying infrared laser process to said internal surface of said gas flow field groove after the completion of said compressing step.

## Description

### TECHNICAL FIELD

The present invention relates to a bipolar plate for a fuel cell which is comprised by a composite material of carbon powders and a thermosetting resin, and a method for producing the same.

### BACKGROUND OF THE ART

A fuel cell is to provide electrical energy generated by a chemical reaction of a fuel gas with an oxidizing gas and, thus, provides efficiency and an excellent environmental feature. Generally, a fuel cell comprises a plurality of unit cells stacked on one another in which each cell includes an electrolyte membrane, a pair of electrodes (anode and cathode) disposed on both sides of the electrolyte membrane so as to be opposed to each other, bipolar plates (separators) disposed to the outside of every electrode via a diffusion layer.

A bipolar plate (separator) for a fuel cell provides functions of maintaining the conductivity of unit cells (conductive function) and of forming a flow field for a fuel gas or an oxidizing gas supplied to unit cells (flow field forming function), therefore, the typical bipolar plate for a fuel cell has the following structure: a bipolar plate for a fuel cell comprises a composite material of carbon powders and a resin and a groove for a gas flow field for flowing a fuel gas or an oxidizing gas is formed to at least one of surface of the bipolar plate for a fuel cell. Onto one side of the bipolar plate for a fuel cell, a gas supplying manifold (gas supply penetrated hole) for supplying a fuel gas or an oxidizing gas to the gas flow field groove is formed and, onto the other side, a gas discharging manifold (gas discharge penetrated hole) is formed.

By the way, it has been known that the water produced by the reaction of the fuel gas with the oxidizing gas affects the properties of the fuel cell and, thus, the function for draining the produced water (draining function) during the generation of electricity is required other than the conductive function and the flow field forming function described in above is required in the bipolar plate for a fuel cell. Furthermore, the draining function of the bipolar plate of the fuel cell depends on the hydrophilic feature of the gas flow field groove and, thus, it is essential to improve the hydrophilic feature of the gas flow field groove to improve the draining function for the fuel cell. Therefore, for the purpose of the improvement of the hydrophilic feature of the gas field groove, (1) a means for pilling a hydrophilic sheet on the surface of the bipolar plate of the fuel cell (first process; see Japanese Patent Application Laid-Open Publication Nos. 2007-115, 619 and 2006-179,400); (2) a means for applying shot blasting to the internal surface of the gas flow field groove (second process; see Japanese Patent Application Laid-Open Publication Nos. 2006-107,989 and 2005-332, 775) ; and a means for immersing the bipolar plate for a fuel cell into an inorganic alkaline aqueous solution (third process; see Japanese Patent Application Laid-Open Publication No. 2005-71,699).

However, in the first process, there are problems that the hydrophilic sheet is peeled off the surface of the bipolar plate for a fuel cell and that wrinkles are formed on the internal surface of the gas flow field groove which will deteriorate the hydrophilic feature of the gas flow field groove and it is difficult to improve the draining function of the bipolar plate for a fuel cell.

In the addition to the above, in the second process, masking process is required to apply to the bipolar plate for a fuel cell before the shot blasting as well as washing process is required to remove the masks after the shot blasting, which will make the operation complicated.

Moreover, in the third process, the inorganic alkaline aqueous solution resided in the bipolar plate for a fuel cell is eluted while running the fuel cell, which will cause the problem of the decomposition of the resins contained in the bipolar plate for a fuel cell.

### SUMMARY OF THE INVENTION

Accordingly, the object of the present invention is to provide a bipolar plate for a fuel cell of a novel construction and the method for producing the same which can solve the above mentioned problems.

The present inventor has made various experiments to solve the problems described in above and achieved the present invention in which an infrared laser beam is irradiated toward the internal surface of a gas flow field groove of a molded body that is prepared by compression molding a composite material of carbon powders and a thermosetting resin to process the internal surface of said gas flow field groove by the infrared laser process, thereby eliminating the thermosetting resin on the internal surface side of the gas flow field groove and increasing defects of the carbon powders (also reducing the ratio of edge area) exposed on the surface of the fuel gas flow field groove 5 (oxygen gas flow field groove 7) to effectively provide roughness to the internal surface of the gas flow field and, thus, the hydrophilic feature of the gas flow field groove can sufficiently be improved without using the conventional processes (the first, second and third processed as mentioned in above).

In other word, in the first aspect of the present invention, there provided a method for producing a bipolar plate for a fuel cell comprised of a composite material of carbon powders and a thermosetting resin, in which the method comprises the steps of:
compression molding a molded body in which a gas flow field groove for flowing a reactive gas on at least any one of surfaces is formed by the use of a punching die and a molding die in the opposed arrangement together, in which the composite material of the carbon powders and the thermosetting resin are received in a material receiving portion in the molding die and the punching die is relatively approached to the molding die; and
irradiating infrared laser beam toward the internal surface of said gas flow field groove while the optical axis of the infrared laser beam is relatively traveled to said molded body along said gas flow field groove to provide an infrared laser process to the internal surface of the gas flow field groove after the completion of the step of compression molding.

The reactive gas means a fuel gas or an oxidizing gas, and the internal surface of the gas flow field groove includes the bottom surface and wall surfaces of said gas flow field.

According to the first aspect of the invention, since the infrared laser beam is irradiated toward the internal surface of said gas flow field groove after said molded body is molded by the compression molding to providing the infrared laser process to the internal surface of said gas flow field groove, the surface roughness of the internal surface of the gas flow field groove can be increased after the consideration of the above novel aspect. Therefore, the hydrophilic feature of the gas flow field groove can sufficiently be improved without using the conventional processes (the first, second and third processes).

According to the second aspect of the invention, the method further comprises, in addition to the first aspect, the step of heating for curing said molded body by applying heat to said molded body after said step of compression molding and before said step of irradiating.

According to the third aspect of the invention, the method further comprises, in addition to the first aspect, the step of compression molding said molded body by approaching said punching die relative to said molding die while heating said punching and molding dies.

According to the fourth aspect of the invention, in the first aspect, the irradiation pitch of said infrared laser beam in the direction of groove width of said gas flow field groove is 0.2 mm or less.

According to the fifth aspect of the invention, in the first or fourth aspect, said composite material comprises a mixture of carbon powders in the range from 80 % by weight to 90 % by weight and a thermosetting resin in the range from 10 % by weight to 20 % by weight.

According to the sixth aspect of the invention, the irradiation dose of the infrared laser beam in the step of irradiating in which the infrared laser process is applied to the internal surface of the gas flow field groove is in the range from 0.005 J/mm² to 0.5 J/mm².

According to the seventh aspect of the invention, there provided a bipolar plate for a fuel cell comprised of a composite material of carbon powders and a thermosetting resin, in which a gas flow field groove is formed on at least any one of surfaces of the bipolar plate for flowing a reactive gas, wherein the internal surface of said gas flow field groove being subjected to an infrared laser process.

In the seventh aspect, since the internal surface of said gas flow field groove has been subjected to the infrared laser process, the surface roughness of the internal surface of the gas flow field groove can be increased under the consideration of the above novel aspect. Therefore, the hydrophilic feature of the gas flow field groove can sufficiently be improved without taking the conventional processes (the first, second and third processes).

According to the eighth aspect of the present invention, the irradiation pitch of the infrared laser process is 0.2 mm or less in the sixth aspect.

According to the ninth aspect of the present invention, the composite material comprises the carbon powders in the range from 80 % by weight to 90 % by weight and the thermosetting resin in the range from 10 % by weight to 20 % by weight mixed to each other in the sixth or seventh aspect.

According to the present invention, without using the conventional processes, the hydrophilic feature of said gas flow field groove can sufficiently be improved, whereby the draining function of said bipolar for the fuel cell is sufficiently increased to improve the cell features of said fuel cell.

### BRIEF DESCRIPTION OF THE DRAWINGS

Fig. 1 is an explanatory view illustrating the irradiating step in the method for producing the fuel cell of the embodiment according to the present invention;
Fig. 2 is a front view illustrating the bipolar plate for a fuel cell at the anode side of the embodiment according to the present invention;
Fig. 3 is a front view illustrating the bipolar plate for a fuel cell at the cathode side of the embodiment according to the present invention;
Fig. 4 is an explanatory view illustrating the compressing step in the method for producing the fuel cell of the embodiment according to the present invention;
Fig. 5 is an explanatory view illustrating the heating step in the method for producing the fuel cell of the embodiment according to the present invention;
Fig. 6 is a schematic view illustrating the irradiation pitch of the laser processing head;
Fig. 7 is a graph showing one example of the results of Raman spectrometry to the bipolar plate for a fuel cell of the embodiment according to the present invention;
Fig. 8 is a microscopic image of the portion of the bipolar plate for a fuel cell of the embodiment according to the present invention to which the infrared laser process has been applied;
Fig. 9 is a microscopic image of one portion of the bipolar plate for a fuel cell of the embodiment according to the present invention to which no infrared laser process has been applied;
Fig. 10 is a microscopic image of a portion near the boundary between the portion to which the infrared laser process has been applied and the portion to which no infrared laser process has been applied in the bipolar plate for a fuel cell of the embodiment according to the present invention;
Fig. 11 is one example of the results of X-ray photo emission spectroscopy of the bipolar plate for a fuel cell of the embodiment according to the present invention;
Fig. 12 is a graph showing the variation per hour of the hydrophilic process to the bipolar plate for a fuel cell to which the infrared laser process has been applied.

### Description of Numerical References

1: bipolar plate for a fuel cell at the anode side;
3: bipolar plate for a fuel cell at the cathode side;
5: fuel gas flow field groove;
7: oxygen gas flow field groove;
9: fuel gas supplying manifold;
11: fuel gas discharging manifold;
13: fuel gas supplying manifold;
15: fuel gas discharging manifold;
17: oxygen gas supplying manifold;
19: oxygen gas discharging manifold;
21: oxygen gas supplying manifold;
23: oxygen gas discharging manifold;
33: punching die;
35: molding die;
37: material receiving part; and
59: laser processing head.

### BEST MODE FOR CARRYING OUT THE INVENTION

The embodiments of the present invention will now be explained with reference to the accompanied drawings. Since the invention can be realized by many different embodiments, the invention is not intended to restrict to the following embodiments or examples.

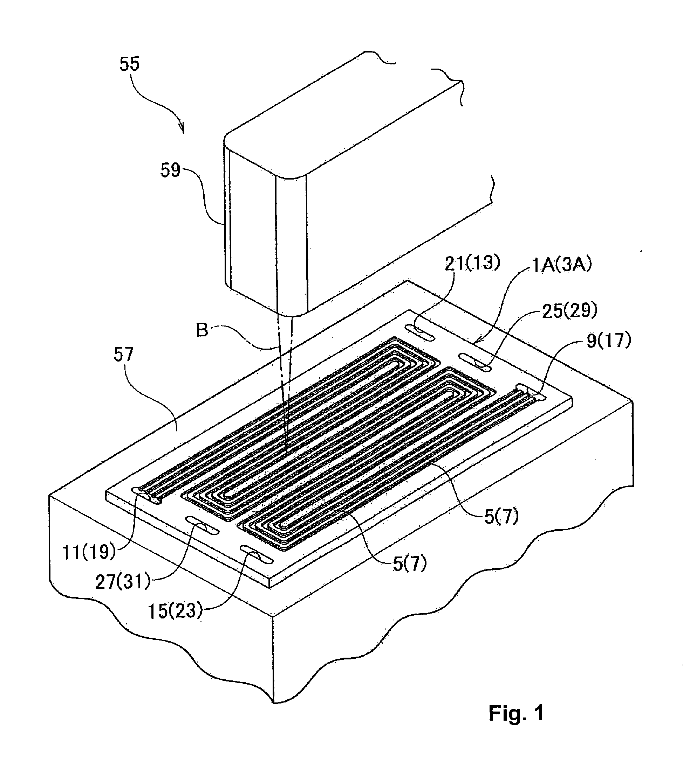

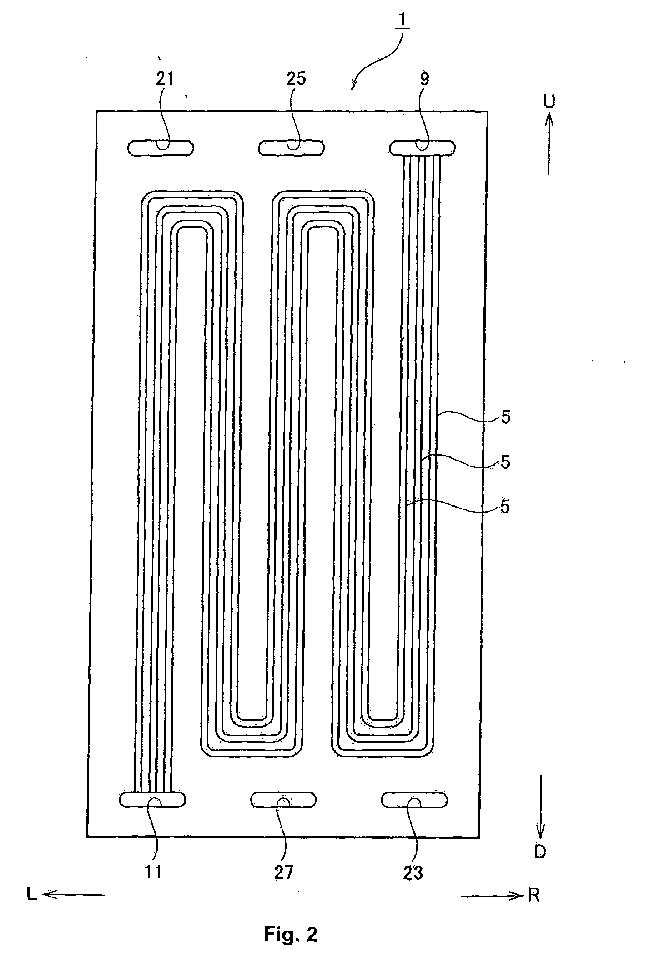

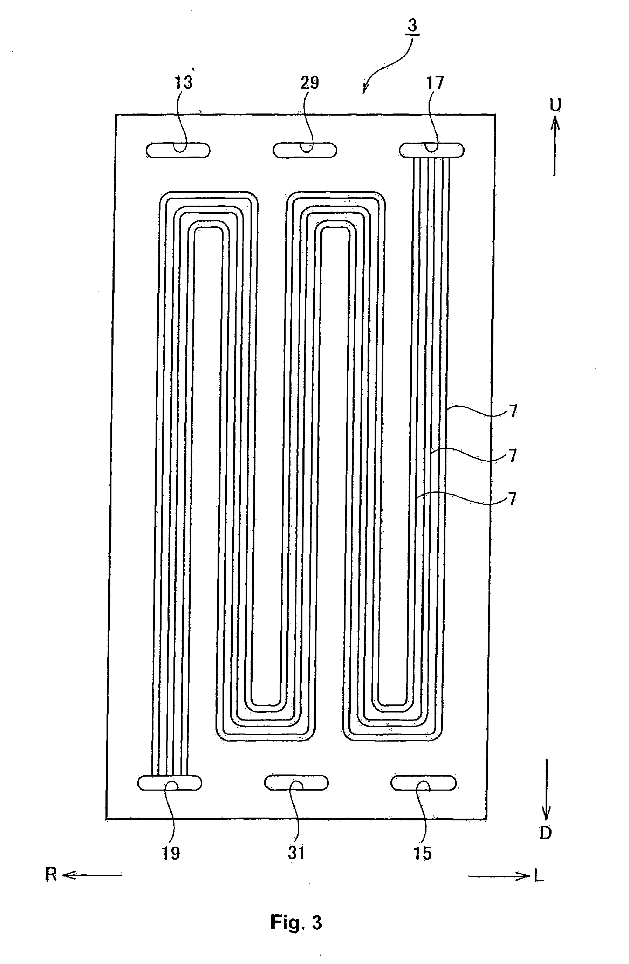

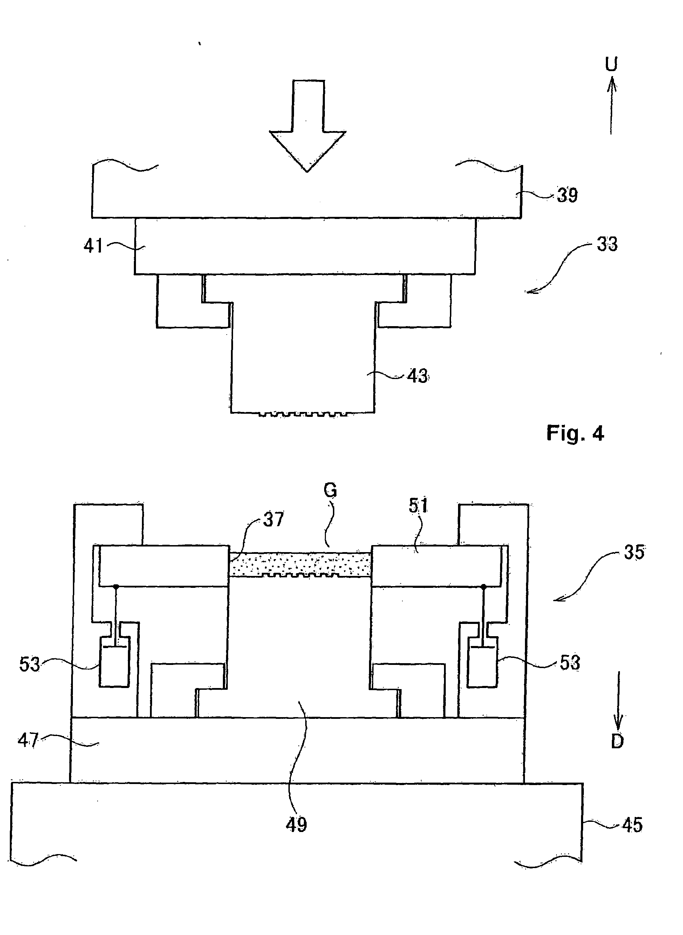

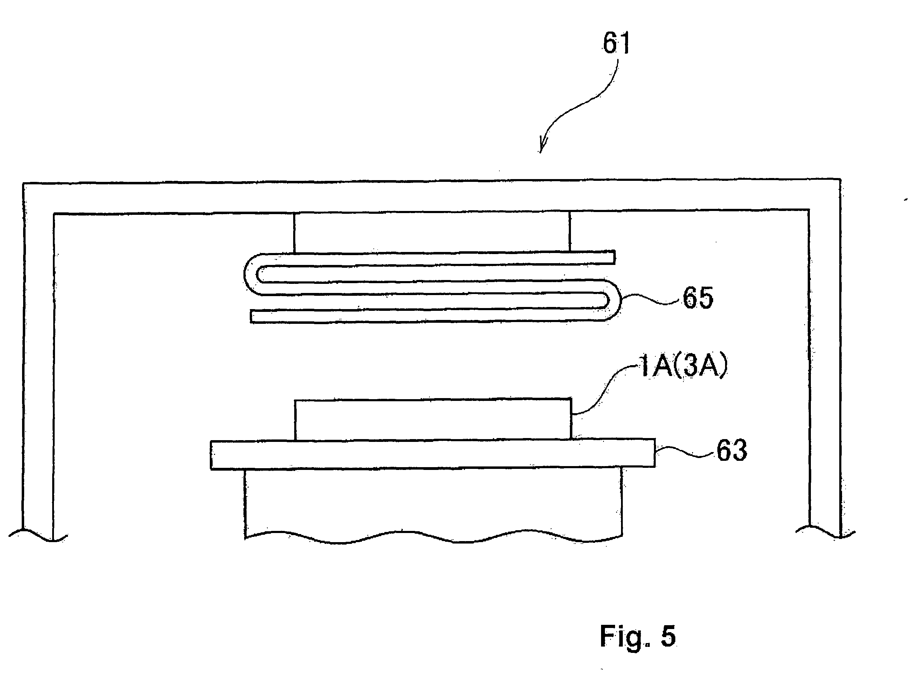

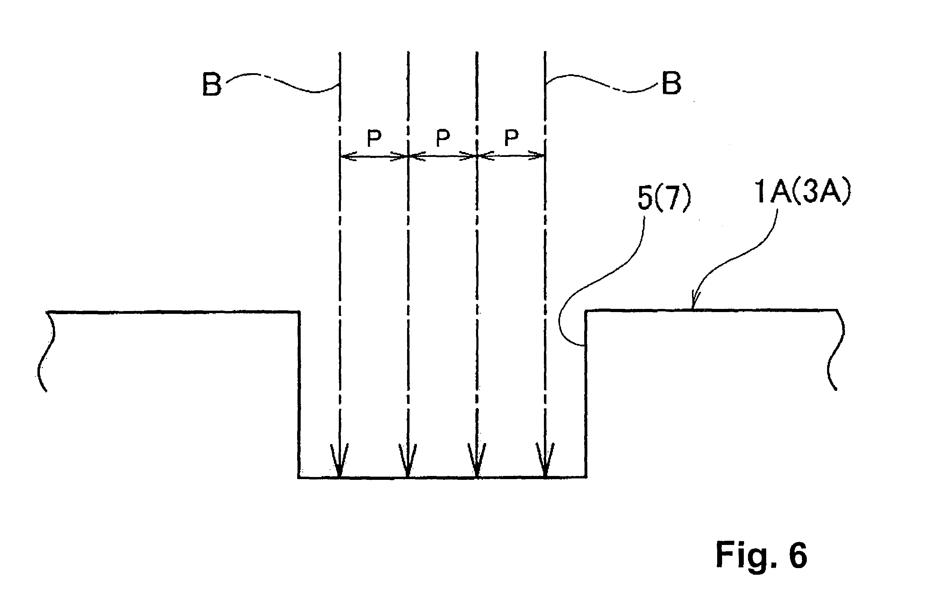

Fig. 1 is an explanatory view illustrating the step of irradiating in the method for producing the bipolar plate for a fuel cell of the embodiment according to the invention; Fig. 2 illustrates the bipolar plate for a fuel cell of the embodiment according to the invention at the side of the anode; Fig. 3 illustrates the bipolar plate for a fuel cell of the embodiment according to the invention at the side of the cathode; Fig. 4 is an explanatory view illustrating the step of compressing in the method for producing the bipolar plate for a fuel cell of the embodiment according to the invention; Fig. 5 is an explanatory view illustrating the step of heating in the method for producing the bipolar plate for a fuel cell of the embodiment according to the invention; and Fig. 6 illustrates the irradiating pitch of the laser processing head. In the drawings, "L" indicates the left direction, "R" indicates the right direction, "FF" indicates the forward, "FR" indicates the rear, "U" indicates the upward direction and "D" indicates the downward direction, respectively.

As shown in Figs. 2 and 3, a bipolar plate 1 for a fuel cell of the embodiment according to the invention is used as a unit cell (not shown) constructing a fuel cell (not shown) and is arranged at the outer side of the anode (not shown) of the unit cell through a diffusion layer (not shown), and a bipolar plate 3 for the fuel cell is arranged at the outer side of the cathode (not shown) in the unit cell through a diffusion layer (not shown).

The bipolar plates for the fuel cell (the bipolar plate 1 for the fuel cell at the anode side and the bipolar plate 3 for the fuel cell at the cathode side) are comprised of a composite material G of carbon powders and a thermosetting resin (see Fig. 4). The thermosetting resin is, for example, an epoxy resin, a polyester resin, a silicone resin, a melamine resin, a phenolic resin or one or two or more of those resins.

On one surface of the bipolar plate 1 for the fuel cell at the anode side, a meander like fuel gas flow field groove 5 for flowing a fuel gas (one of reactive gases) in the anode of the fuel cell is formed. And, one surface of the bipolar plate 3 for the fuel cell at the cathode side, a meander like oxygen gas flow field groove 7 for flowing an oxygen gas (one of reactive gases) in the anode of the fuel cell is formed. It is preferable that the groove width of each of the fuel gas flow field groove 5 and the oxygen gas flow field groove 7 are in the range from 0.3 mm to 1.0 mm, and groove depth of each of the fuel gas flow field groove 5 and the oxygen gas flow field groove 7 are in the range from 0.3 mm to 1.0 mm.

To the other surfaces of the bipolar plate 1 for the fuel cell at the anode side and bipolar plate 3 for the fuel cell at the cathode side, a cooling water flow field groove (not shown) is formed, respectively.

To the upper right side of the bipolar plate 1 for the fuel cell at the anode side, a fuel gas supplying manifold 9 (fuel gas supply penetrated hole) for supplying the fuel gas to the fuel gas flow field groove 5. To the lower left side of the bipolar plate 1 for the fuel cell at the anode side, a fuel gas discharging manifold 11 (fuel gas discharge penetrated hole) for discharging the fuel gas from the fuel gas flow field groove 5 is formed. To the upper left side of the bipolar plate 3 for the fuel cell at the cathode, a fuel gas supplying manifold 13 (fuel gas supply penetrated hole) for supplying the fuel gas to the fuel gas flow field groove 5 is formed. To the lower right side of the bipolar plate 3 for the fuel cell at the cathode side, a fuel gas discharging manifold 15 (fuel gas discharge penetrated hole) for discharging the fuel gas from the fuel gas flow field groove 5 is formed.

To the upper right side of the bipolar plate 3 for the fuel cell at the cathode side, an oxygen gas supplying manifold 7(oxygen gas supply penetrated hole) for supplying the oxygen gas to the oxygen gas flow field groove 7. To the lower left side of the bipolar plate 3 for the fuel cell at the cathode side, an oxygen gas discharging manifold 19 (oxygen gas discharge penetrated hole) for discharging the oxygen gas from the oxygen gas flow field groove 7 is formed. Moreover, to the upper left side of the bipolar plate 1 for the fuel cell at the anode side, an oxygen gas supplying manifold 21 (oxygen gas supply penetrated hole) for supplying the oxygen gas to the oxygen gas flow field groove 7. As well, to the upper lower right of the bipolar plate 1 for the fuel cell at the anode side, an oxygen gas discharging manifold 23 (oxygen gas discharge penetrated hole) for discharging the oxygen gas from the oxygen gas flow field groove 7.

To the upper central portion of the bipolar plate 1 for the fuel cell at the anode side, a cooling water supplying manifold 25 (cooling water supply penetrated hole) for supplying the cooling water to the cooling water flow field groove. To the lower central portion of the bipolar plate 1 for the fuel cell at the anode side, a cooling water discharging manifold 27 (cooling water discharge penetrated hole) for discharging the cooling water from the cooling water flow field groove. As well as, to the upper central portion of the bipolar plate 3 for the fuel cell at the cathode, a cooling water supplying manifold 29 (cooling water supply penetrated hole) for supplying the cooling water to the cooling water flow field groove. To the upper central portion of the bipolar plate 3 for the fuel cell at the cathode, a cooling water discharging manifold 31 (cooling water discharge penetrated hole) for discharging the cooling water from the cooling water flow field groove.

Further, as shown in Fig. 1, the respective internal surfaces of the fuel gas flow field groove 5 in the bipolar plate 1 for the fuel cell at the anode side and the oxygen gas flow field groove 7 in the bipolar plate 3 for the fuel cell at the cathode are subjected to the laser process with the irradiation of the infrared laser beam B of a wavelength ranging from 0.7 micrometers to 1 mm. This is based on a novel knowledge which has been found by the result of several kinds of experiments repeatedly carried out by the inventor, in which when the infrared laser beam is irradiated toward the internal surface of the fuel gas flow field groove and/or the oxygen gas flow field groove in the molded body provided by compression molding the composite material of the carbon powders and the thermosetting resin to apply a laser process to the internal surface of the fuel gas flow field groove and/or the oxygen gas flow field groove, the thermosetting resin on the internal surface of the fuel gas flow field groove and/or the oxygen gas flow field groove is removed to effectively provide the increased surface roughness to internal surface of the fuel gas flow field and/or the oxygen gas flow field. Herein, the preferred irradiation dose of the infrared laser beam is in the range from 0.005 J/mm² to 0.5 J/mm², more preferably, 0.01 J/mm² to 0. 5 J/mm² when the pitch described in below is 0.2 mm or less. When the irradiation dose is 0.005 J/mm² or above, the wetting tension thereof can be maintained at a high level, while when the irradiation dose is 0.5 J/mm² or less, unnecessary deterioration of the surface and unnecessary waste of the energy can be prevented.

Next, the method for producing the bipolar plate for a fuel cell of the embodiment according to the present invention will now be explained.

The method for producing the bipolar plate for a fuel cell of the embodiment according to the present invention is a process for preparing two bipolar plates for the fuel cell (the bipolar plate 1 for the fuel cell at the anode side and the bipolar plate 3 for the fuel cell at the cathode side) made of the composite material G of the carbon powders and the thermosetting resin, respectively, and comprises the steps of: (i) compressing step; (ii) irradiating step; and (iii) heating step. The method for producing the bipolar plate 1 for the fuel cell at the anode side and the method for producing the bipolar plate 3 for the fuel cell at the cathode side together will be explained.

### (i) Compressing step:

As shown in Fig. 4, a punching die 33 and a molding die 35 opposed to each other are used and the material receiving part 37 (cavity) of the molding die is filled with the composite material of the carbon powders and the thermosetting resin.

Herein, the punching die has a construction that is same as that of a known punching die (see, Japanese Patent Application Laid-Open Publication Nos. 2007-14,172 and 2007-137,017) and it is detachably provided to a movable frame 39 of a press machine. The punching die 33 is detachably mounted to the movable frame 39. Also, the punching die 33 includes a punching holder 41 mounted to the movable frame 39 and a punch 42 provided to this punching holder 41. The tip end surface of a punch 43 has a configuration corresponding to the configuration of one of surfaces of the bipolar plate 1 for the fuel cell at the anode side (the bipolar plate 3 for the fuel cell at the cathode side).

The molding die 35 is prepared to have the same construction as that of a known molding die (see, Japanese Patent Application Laid-Open Publication Nos. 2007-131,724 and 2007-137,017) and it is detachably provided to a fixed frame 45 of the press machine. The molding die 35 includes a die holder 47 mounted to the fixed frame 45, a die 49 provided to this die holder 47 and a plurality of actuators 53 for vertically traveling the die 49 at the outer periphery thereof. Also, the material receiving part 38 for receiving the composite material of the carbon powders and the thermosetting resin is defined by the internal surface of the tip end surface of the die 49 and a frame member 51. The die 49 has a configuration corresponding to the configuration of the other surface of the bipolar plate 1 for the fuel cell at the anode side (the bipolar plate 3 for the fuel cell at the cathode side).

The composite material G is prepared by mixing the carbon powders in the range from 80 % by weight to 90 % by weight and the following thermosetting resin in the range from 10 % by weight to 20 % by weight. When the carbon powders are less than 80 % by weight, it would be difficult to secure the sufficient conductive function for the bipolar plate 1 for the fuel cell at the anode side (the bipolar plate 3 for the fuel cell at the cathode side), while when the carbon powders contained are over 90 % by weight, it would be difficult to sufficiently secure the mechanical strength (bending strength and compression strength) for bipolar plate 1 for the fuel cell at the anode side (the bipolar plate 3 for the fuel cell at the cathode side).

After the composite material G of the carbon powders and the thermosetting resin is received within the material receiving part 37 of the molding die 35, the movable frame 39 is downwardly moved so that the punching die 33 is approached to the molding die 35. Thus, a molded body 1A having the fuel gas flow field groove 5 and the cooling water flow field groove provided on one of surfaces and the other surface thereof, respectively (a molded body 3A having the oxygen gas flow field groove 7 and the cooling water flow field groove provided on one of surfaces and the other surface thereof, respectively) can be prepared by compression molding (see, Fig. 5). While molding the molded body 1A (3A), the fuel gas supplying manifold 9 (13), the fuel gas discharging manifold 11 (15), the oxygen gas supplying manifold 17 (21), the oxygen gas discharging manifold 19 (23), the cooling water supplying manifold 25 (29) and the cooling water discharging manifold 27 (31) are also formed thereto.

After the preparation of the molded body 1A (3A) by compression molding, the movable frame 39 is upwardly moved so that the punching die 33 is departed from the molding die 35. The frame member 51 is downwardly moved by driving the plurality of actuators 53. Accordingly, the molded body 1A (3A) can be taken out of the dies 33 and 35.

### (ii) Irradiating step:

As shown in Fig. 1, after the completion of the compressing step (i), the molded body 1A (3A) is set to the predetermined position on a table 57 of an infrared laser process machine.

The infrared laser process machine 55 is provided to the upper of the table 57 and includes a laser processing head 59 that is capable of irradiating an infrared laser beam B other than the table 57, in which the laser processing head 59 can be rotated in any directions such that the optical axis of the infrared laser beam can be moved relative to the table 57. The laser processing head 59 internally includes a condenser (not shown) for condensing the infrared laser beam B and is optically connected to a laser oscillator being capable of oscillating the infrared laser beam B (not shown) through a reflector (not shown).

After the molded body 1A (3A) is set to the predetermined position on the table 57, the infrared laser processing head 59 is used to irradiate the infrared leaser beam B having a peak wavelength in the range from 0.7 micrometers to 1 mm from the infrared laser processing head 59 to the internal surface of the fuel gas flow field groove 5 (oxygen gas flow field groove 7), as well as, the infrared laser processing head 59 is turned to an appropriate direction such that the optical axis of the infrared laser beam B is moved relatively to the table 57 (i.e., the molded body 1A (3A)) along the fuel gas flow field groove 5. Therefore, the internal surface of the fuel gas flow field groove 5 (the oxygen gas flow field groove 7) can be subjected to the infrared laser process by the irradiation of the infrared laser beam B.

As shown in Fig. 6, it is preferable that the irradiation pitch p of the infrared laser processing head 59 in the groove width direction of the fuel gas flow field groove 5 (the oxygen gas flow field groove 7) is 0.2 mm or less. Because the hydrophilic feature of the fuel gas flow field groove 5 (the oxygen gas flow field groove 7) can sufficiently be secured when the irradiation pitch of the infrared laser processing head 59 in the groove width of the fuel gas flow field groove 5 (the oxygen gas flow field groove 7) is 0.2 mm or less; see the following example, and, for example, the wetting tension can be more than a certain level when the irradiation pitch is 0.2 mm or less. While, the irradiation pitch p of the processing head 59 may preferably be 50 micrometers or more. When the irradiation pitch is 50 micrometers or more, the processing time can be shorten as well as the above effect can sufficiently be secured.

### (iii) Heating step:

As shown in Fig. 5, after the completion of the irradiating step (ii), with the use of a heat process furnace 61 having a support 63, the molded body 1A (3A) is set to the predetermined position on the support 63 in the heat process furnace 61. And, a heater 65 of the heat process furnace61 is appropriately activated to heat the molded body 1A (3A) at a temperature or above of the curing temperature of the thermosetting resin. Whereby, the molded body 1A (3A) can be cured.

Accordingly, the bipolar plate 1 for the fuel cell at the anode side (the bipolar plate 3 for the fuel cell at the cathode side) comprised of the composite material G of the carbon powders and the thermosetting resin can be produced.

In the compressing step (i), the molded body 1A (3A) may be prepared by compression molding while heating the punching die 33 and the molding die 35 at a temperature lower than the curing temperature of the thermosetting resin. Alternatively, when the molded body 1A (3A) may be prepared by compression molding while heating the punching die 33 and the molding die 35 at a temperature more than the curing temperature of the thermosetting resin in the compressing step (i), the heating step (iii) may be eliminated. Yet, alternatively, the irradiating step (ii) may be followed by the heating step (iii).

Next, the action and the effect of the embodiment of the present invention will be explained.

In the bipolar plate 1 for the fuel cell at the anode side (the bipolar plate 3 for the fuel cell at the cathode side) of the embodiment according to the present invention, the thermosetting resin on the internal surface side of the fuel gas flow field groove 5 (the oxygen gas flow field groove 7) can be removed to provide the increased surface roughness to the fuel gas flow field groove 5 (the oxygen gas flow field groove 7) under consideration of the novel knowledge as described in above since the fuel gas flow field groove 5 (the oxygen gas flow field groove 7) is subjected to the infrared laser process. More specifically, when the infrared laser beam is irradiated to the internal surface of the fuel gas flow field groove 5 (the oxygen gas flow field groove 7), the resin component present in the surface of the molded body 1A is denatured by, for example, the thermal degradation thereof to be decreased as well as the defect of the crystalline structure of the carbon powders exposed to the surface of the fuel gas flow field groove 5 (the oxygen gas flow field groove 7) is increased to lower the ratio of edge are to provide the increased surface roughness, whereby the hydrophilic feature of the fuel gas flow field groove 5 (the oxygen gas flow field groove 7) can sufficiently be improved without the conventional process (the first process, the second process and the third process).

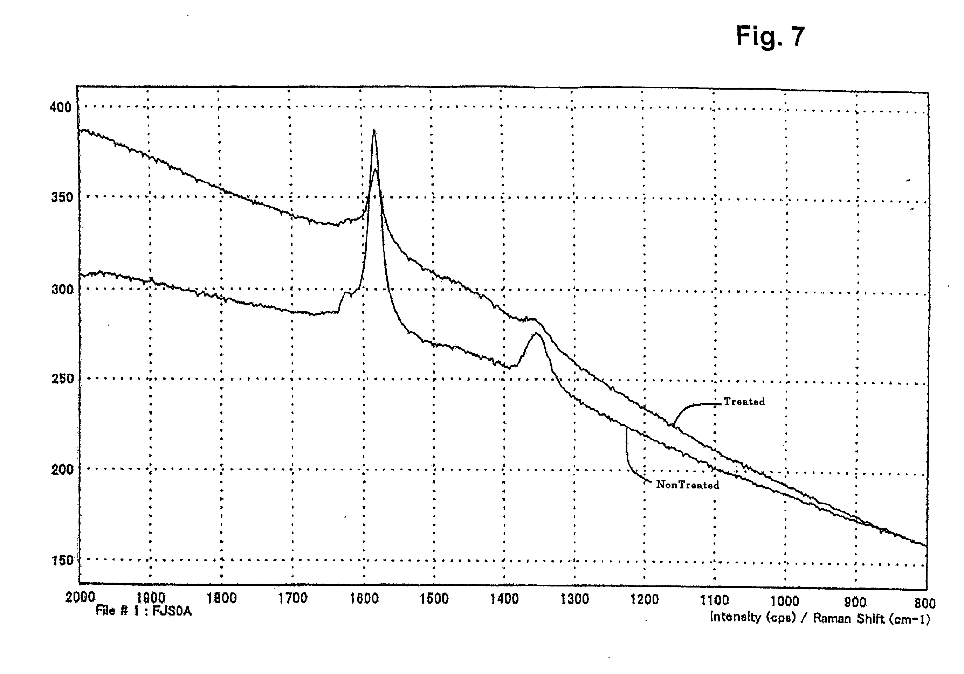

Fig. 7 illustrates one example of the results of Raman spectrometry applied to the bipolar plate for a fuel cell that has been subjected to the infrared laser process and the bipolar plate for a fuel cell that has not been subjected to this process. As shown in Fig. 7, when the infrared laser process is applied to the surface, the remarkable thermal degradation and denature of the organic substances can be recognized because there are background by fluorescence and the increased inclination. Furthermore, in the band peak around 1,580 cm⁻¹, broadening and the decrease of the band intensity ratio (the ratio of the band intensity from the background relative to the band width) can also be recognized and the change in the crystalline structure of the carbon powders can be confirmed.

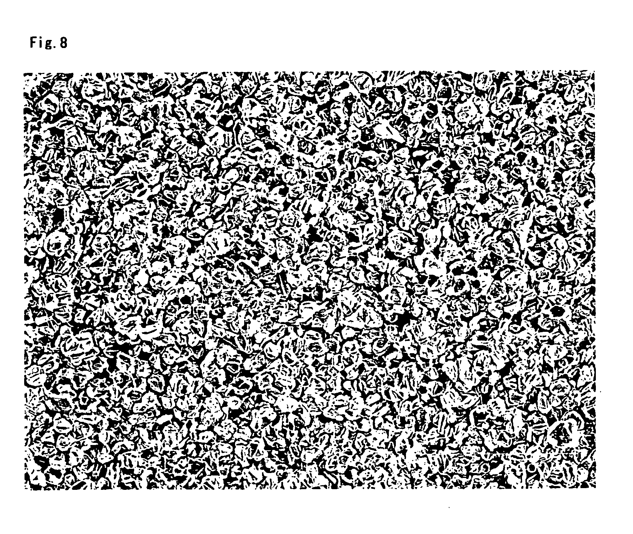

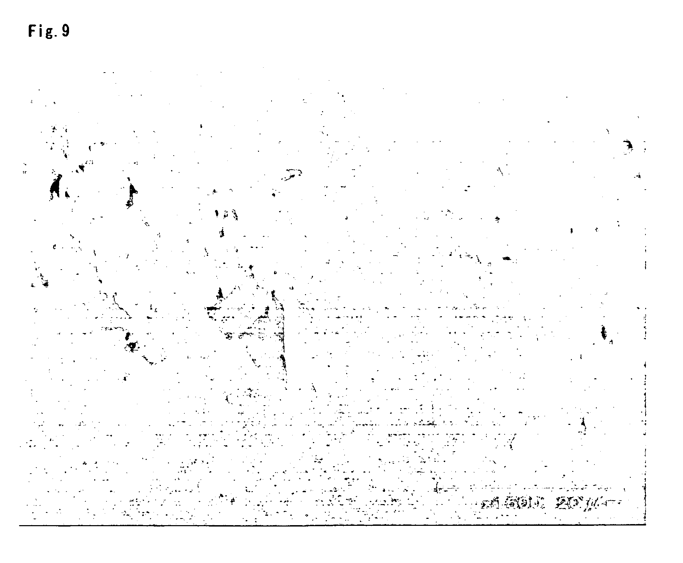

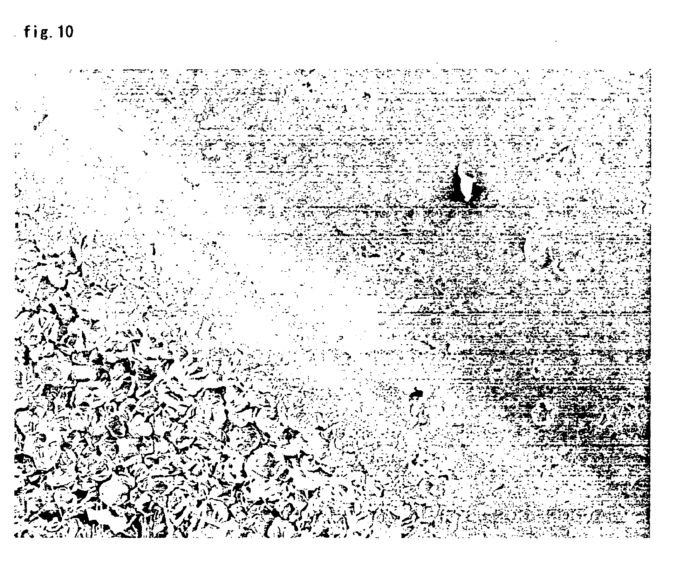

Fig. 8 illustrates a microscopic image of one portion of the bipolar plate for a fuel cell to which the infrared laser process has been applied; Fig. 9 illustrates a microscopic image of one portion of the bipolar plate for a fuel cell to which no infrared laser process has been applied; and Fig. 10 illustrates a microscopic image of a portion near the boundary of the portion to which no infrared laser process has been applied (the region to which the infrared laser process has been applied is shown in the lower left side; the region to which no infrared laser process has been applied is shown in the upper right side in Fig. 10), respectively. As shown in Figs. 8 to 10, it can be recognized that the crystalline structure of the portion of the surface to which the infrared laser process has been applied is remarkably changed. This is one of the characteristic effects of the infrared laser process.

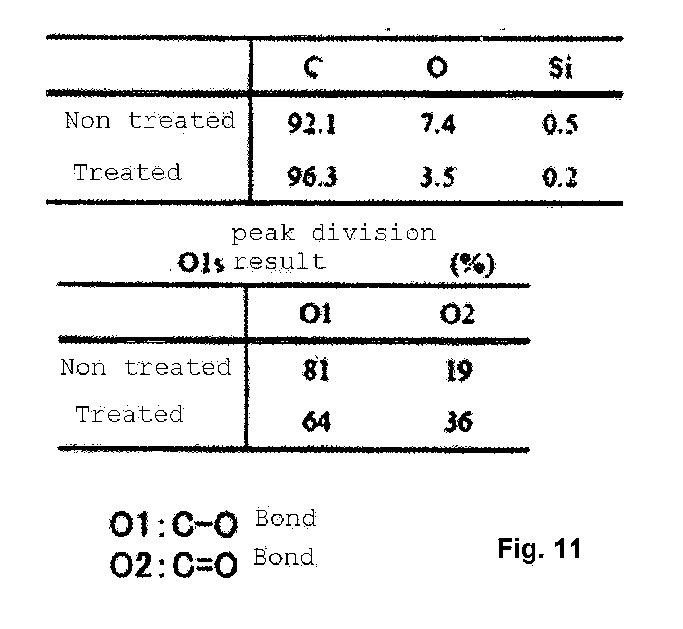

Also, the change in the crystalline structure of the carbon powders was subjected to X-ray photo emission spectroscopy. Fig. 11 illustrates one example the results of the X-ray photoelectron spectrometry of the bipolar plate for a fuel cell to which the infrared laser process has been applied and the bipolar plate for a fuel cell to which no infrared laser process has been applied. As shown in this figure, it could be confirmed that the oxygen atoms were decreased by the process, that is, the resin component containing oxygen was decreased. Further, since the oxygen bond form was also changed, it could also be confirmed that the relative amount of the carboxyl groups and the oxidation was progressed. In other word, similar to the embodiment of the present invention, by applying laser irradiation within the wavelength range of infrared rays, both the resin component and the carbon powders can be suitably denatured. It can be considered that a partial area having a very excellent hydrophilic feature may be formed.

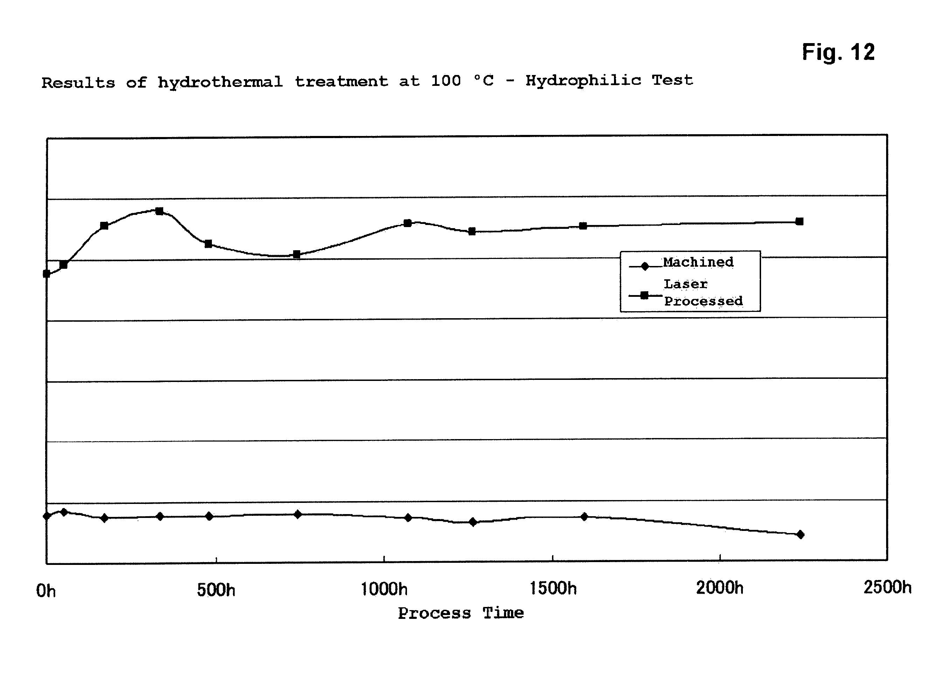

Fig. 12 illustrates the variation per hour of the process to provide hydrophilic feature to the bipolar plate for a fuel cell to which the infrared laser process has been applied. As specifically explained, this figure illustrates one example of the result of the hydrophilic test after the application of a hydrothermal process at 100 degrees C, in which the horizontal axis represents the process time and the vertical axis represents the hydrophilic feature (the results of the wetting tension test in Fig. 12 is in the accordance with the method of JIS K6768). As shown in this figure, in the bipolar plate for a fuel cell of the embodiment according to the present invention, it is possible to remarkably change the structure itself, which is not a level where the functional groups present in the surface are modified, by irradiating the infrared laser to the surface, thereby maintaining the suitable hydrophilic feature thereof for a long time.

In the method for producing the bipolar plate for a fuel cell of the embodiment according to the present invention, after the molded body 1A (3A) is prepared by compression molding, the infrared laser beam B is irradiated toward the internal surface of the fuel gas flow field groove 5 (the oxygen gas flow field groove 7) from the infrared laser processing head to apply the laser process thereto and, therefore, the same function as the bipolar plate 1 for the fuel cell at the anode side (the bipolar plate 3 for the fuel cell at the cathode side) of the embodiment according to the present invention can be provided.

Therefore, according to the bipolar plate 1 for the fuel cell and the method for producing a bipolar plate for a fuel cell of the embodiments according to the present invention, the draining function of the bipolar plate 1 for the fuel cell at the anode side (the bipolar plate 3 for the fuel cell at the cathode side) can sufficiently be increased to improve the cell properties of the fuel cell while solving the problems in the prior art described in above.

The present invention is not intended to restricted to the description of the embodiments in above and, for example, when the fuel gas flow field groove 5 is formed on one of the surfaces of the bipolar plate 1 for the fuel cell at the anode side and on one of the surface of the bipolar plate 3 for the fuel cell at the cathode side, the fuel gas flow field groove and the oxygen gas flow field groove are provided to each of the surfaces of the bipolar plate for a fuel cell substituted for providing the oxygen gas flow field groove 7 to one of the surfaces of the bipolar plate 3 for the fuel cell at the cathode side.

### EXAMPLES

The wetting tension test in accordance with JIS K6768 was applied to the bipolar plate for a fuel cell having the internal surface of the gas flow field groove to which the infrared laser process has been applied (the bipolar plate for a fuel cell according to the example) ; the bipolar plate for a fuel cell having the internal surface of the gas flow field groove to which no surface process has been applied (the bipolar plate for a fuel cell according to Comparative Example 1) ; and the bipolar plate for a fuel cell having the internal surface of the gas flow field groove to which shot blasting has been applied (the bipolar plate for a fuel cell according to Comparative Example 2). The results are shown in Table 1.

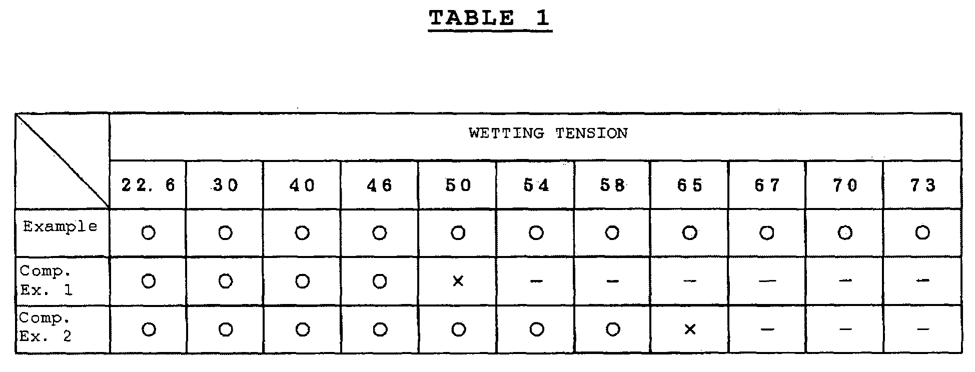

As shown in Table 1, the wetting tension of the gas flow field groove of the gas flow field groove in the bipolar plate for a fuel cell of the example was more increased than those in respective bipolar plates for the fuel cell in Comparative Examples 1 and 2 and it could be confirmed that the hydrophilic feature of the gas flow field groove of the example was sufficiently improved.

As well, the wetting tension test method in accordance with JIS K6768 was applied to the bipolar plate for a fuel cell having the internal surface of the gas flow field groove to which the infrared laser process has been applied with the varied conditions of the laser (the traveling rate of the laser processing head and the irradiation pitch). The results are shown in Table 2.

**TABLE 2**

| Condition of Laser | Process Rate | Pitch | Irradiation Dose | Process Rate | Wetting Tension |
|---|---|---|---|---|---|
| | mm/sec | mm | J/mm² | sec/mm² | mN/m |
| | A | B | C | 1/AB | D |
| 500-0.05 | 500 | 0.05 | 0.3276 | 0.0400 | 73 |
| 2000-0.05 | 2000 | 0.05 | 0.0822 | 0.0100 | 73 |
| 3000-0.05 | 3000 | 0.05 | 0.0547 | 0.0067 | 73 |
| 500-0.1 | 500 | 0.1 | 0.1648 | 0.0200 | 73 |
| 2000-0.1 | 2000 | 0.1 | 0.0411 | 0.0050 | 73 |
| 3000-0.1 | 3000 | 0.1 | 0.0272 | 0.0033 | 73 |
| 500-0.2 | 500 | 0.2 | 0.0825 | 0.0100 | 73 |
| 2000-0.2 | 2000 | 0.2 | 0.0207 | 0.0025 | 73 |
| 3000-0.2 | 3000 | 0.2 | 0.0137 | 0.0017 | 70 |
| 500-0.3 | 500 | 0.3 | 0.0551 | 0.0067 | 73 |
| 2000-0.3 | 2000 | 0.3 | 0.0140 | 0.0017 | 67 |
| 3000-0.3 | 3000 | 0.3 | 0.0090 | 0.0011 | 65 |

It could be recognized that when the irradiation pitch of the laser processing head was 0.2 mm or less, the wetting tension of the gas flow field groove was increased to sufficiently improve the hydrophilic feature of the gas flow field groove. According to the results, it can be determined that the wetting tension of 65 mN/m or above can be secured when the irradiation dose is 0.005 J/mm² and the wetting tension of 70 mN/m can be secured when the pitch is 0.2 mm or less and the irradiation dose is 0.01 J/mm².

In the addition to the above, Fig. 12 also shows the results of the hydrophilic test after the application of hydrothermal process of 100 degrees C to both bipolar plates for the fuel cell of the example and Comparative Example 2, respectively, in which the horizontal axis represents the process time and the vertical axis represents the hydrophilic feature (the results of the wetting tension test method in accordance with JIS K6768). As shown in this figure, the bipolar plate for a fuel cell according the embodiments also provides the effect of maintaining the suitable hydrophilic feature for a long time. The machining in the drawings means shot blasting applied to the bipolar plate for a fuel cell in Comparative Example 2. According to this result, it could be confirmed that the hydrophilic feature can be maintained for a long time by applying the infrared laser process of the embodiments according to the present invention.

## Claims

1. A method for producing a bipolar plate for a fuel cell comprised of a composite material of carbon powders and a thermosetting resin, in which the method comprises the steps of:
compressing said composite material of the carbon powders and the thermosetting resin to provide a molded body by compression molding having a gas flow field groove for flowing a reactive gas formed on at least one of the surfaces thereof, wherein a punching die and a molding die opposed to each other being used and said composite material of the carbon powders and the thermosetting resin being received in a material receiving part of said molding die, wherein said punching die being approached relatively to said molding die; and
irradiating an infrared laser beam toward the internal surface of said gas flow field groove while relatively moving the optical axis of said infrared laser beam to said molded body along said gas flow field groove, thereby applying infrared laser process to said internal surface of said gas flow field groove after the completion of said compressing step.

2. The method for producing a bipolar plate for a fuel cell as set forth in Claim 1, wherein said method further comprising the step of heating after the completion of said compressing step and before said irradiating step, wherein said molded body being heated to cure thereof.

3. The method for producing a bipolar plate for a fuel cell as set forth in Claim 1, wherein said punching die being relatively approached to said molding die while heating said punching die and said molding die in said compressing step, thereby preparing said molded body by compression molding.

4. The method for producing a bipolar plate for a fuel cell as set forth in Claim 1, wherein the irradiation pitch of said infrared laser beam in the direction of the groove width of said gas flow field groove being 0.2 mm or less.

5. The method for producing a bipolar plate for a fuel cell as set forth in any one of Claims 1 and 4, wherein said composite material comprising the carbon powders in the range from 80 % by weight to 90 % by weight and the thermosetting resin in the range from 10 % by weight to 20 % by weight mixed.

6. The method for producing a bipolar plate for a fuel cell as set forth in Claim 1, wherein the irradiation dose of said infrared laser beam in said irradiating step for applying the infrared laser process to the internal surface of said gas flow field groove being in the range from 0.005 J/mm² to 0.5 J/mm².

7. A bipolar plate for a fuel cell comprised of a composite material of carbon powders and a thermosetting resin, wherein a gas flow field groove for flowing a reactive gas being formed on at least any one of surfaces of said bipolar plate, wherein the internal surface of said gas flow field groove being subjected to infrared laser process.

8. The bipolar plate for a fuel cell as set forth in Claim 6, wherein the irradiation pitch in said infrared laser process being 0.2 mm or less.

9. The bipolar plate for a fuel cell as set forth in Claim 6, wherein said composite material comprising the carbon powders in the range from 80 % by weight to 90 % by weight and the thermosetting resin in the range from 10 % by weight
to 20 % by weight mixed.
